# EUROPEAN PATENT APPLICATION

(11) **EP 3 726 352 A1**
(43) Date of publication of application: **21.10.2020**
(21) Application number: 20168753.0
(22) Date of filing: 08.04.2020
(51) Int. Cl.: G06F 3/041, B60K 35/00, G06F 3/0488

(54) **VEHICLE OPERATION INPUT APPARATUS, VEHICLE OPERATION INPUT AND COMPUTER PROGRAM PRODUCT**

(30) Priority: 19.04.2019 JP 2019080163
(71) Applicant: MAZDA MOTOR CORPORATION, Fuchu-cho, Aki-gun Hiroshima 730-8670 (JP)
(72) Inventor: YAMASHITA, Takayoshi, Fuchu-cho, Aki-gun, Hiroshima 730-8670 (JP); KATO, Shinobu, Fuchu-cho, Aki-gun, Hiroshima 730-8670 (JP); KATO, Yuri, Fuchu-cho, Aki-gun, Hiroshima 730-8670 (JP); MATSUO, Juntaro, Fuchu-cho, Aki-gun, Hiroshima 730-8670 (JP); FUJIMURA, Eri, Fuchu-cho, Aki-gun, Hiroshima 730-8670 (JP); MOROKAWA, Hado, Fuchu-cho, Aki-gun, Hiroshima 730-8670 (JP)
(74) Representative: Müller-Boré & Partner Patentanwälte PartG mbB

(57) **Abstract**

The present disclosure provides a vehicle operation input apparatus D that performs an input to a device installed in a vehicle and achieving a predetermined function at a plurality of different levels. The vehicle operation input apparatus D includes a display unit 1, an input position detection unit 2 that has an operation surface associated with a first position on a display surface of the display unit 1 and detects a second position on the operation surface in which an input operation is performed, a display control unit 32 that controls the display unit 1, an input content obtaining unit 33 that obtains, as input content, display content displayed in the first position that corresponds to the second position detected by the input position detection unit 2, and a vehicle speed measurement unit 5 and a stop determination unit 34 as a stop detection unit that detects whether a stop occurs in the vehicle, in which the display control unit 32 indicates level setting display representing the setting of the levels in mutually different display aspects depending on whether the stop detected by the stop detection unit occurs, and the input operation has mutually different operation aspects that depend on whether the vehicle is stopped.

## Description

### TECHNICAL FIELD

The present disclosure relates to a vehicle operation input apparatus and a vehicle operation input method for inputting input content to a device (which may include hardware and software) installed in a vehicle.

### BACKGROUND ART

Various devices (e.g., including hardware and software) having predetermined functions can be installed in vehicles such as, for example, automobiles and railroad vehicles. Such a vehicle has a vehicle operation input apparatus that receives, from a user, input operations such as a selection of a setting target and an input of a setting value to the selected setting target to operate the devices as desired. Such a vehicle operation input apparatus is disclosed in, for example, PTL 1.

The touch type vehicle operation input apparatus disclosed in PTL 1 includes travel state identifying means that identifies whether a vehicle is traveling, touch operation input means that receives a touch continuation operation performed by continuing a touch state with respect to a predetermined touch surface, and control means. When it is identified that the vehicle is not traveling, if the touch continuation operation is performed, the control means successively obtains a predetermined change amount concerning the touch continuation operation while the touch state of the touch continuation operation is continued and a predetermined control parameter is continuously changed based on the change amount obtained successively. In contrast, when it is identified that the vehicle is traveling, the control means makes a predetermined parameter change to the control parameter each time the touch continuation operation is performed.

### [Prior Art Documents]

### [Patent documents]

[Patent document 1] JP-A-2013-97519

### SUMMARY

By the way, since the touch type vehicle operation input apparatus disclosed in PTL 1 continuously changes the control parameter during a stop and makes a predetermined parameter change to the control parameter during traveling, the touch type vehicle operation input apparatus is not easily affected by vibrations during traveling, thereby preventing an input operation from becoming an undesired operation due to vibrations received while the touch is continued. However, an occupant (e.g., a driver or a passenger of the vehicle) should recognize (and/or remember) this in advance. Otherwise, there may be a risk that desired input content cannot be input because the occupant may erroneously assume that, for example, the control parameter is continuously changed during traveling. In other words, an intended operation of the device might not be achieved in case the occupant erroneously assumes that the control parameter is continuously changed during traveling.

Thus, according to an aspect, the problem relates to improving operation of a device installed in a vehicle. This problem is solved by the features disclosed by the independent claims. Further exemplary embodiments are defined by the dependent claims.

According to an aspect, a vehicle operation input apparatus is provided. The vehicle operation input apparatus is configured to perform an input to a device that is installed in a vehicle and that is configured to achieve a predetermined function at a plurality of mutually different levels. The vehicle operation input apparatus includes a display unit, an input position detection unit that has an operation surface associated with a first position on a display surface of the display unit and is configured to detect a second position on the operation surface, the second position being where an input operation is performed; a display control unit configured to control the display unit; an input content obtaining unit configured to obtain, as input content, display content displayed in the first position that corresponds to the second position detected by the input position detection unit; and a stop detection unit configured to detect whether the vehicle is stopped. The display control unit is configured to indicate a level setting display representing a setting of the levels in the first position on the display surface in mutually different display aspects depending on whether the stop detection unit has detected that the vehicle is stopped. Further, the input operation has mutually different operation aspects that depend on whether the stop detection unit has detected that the vehicle is stopped. Particularly in some circumstances, in various aspects and embodiments as described herein, the device may be an air conditioning apparatus and the levels may be the values of an airflow amount when the airflow amount is the setting target. Particularly in some further circumstances, in various aspects and embodiments as described herein, the device may be an air conditioning apparatus and the levels may be the values of a temperature when the temperature is the setting target. Particularly in some further circumstances, in various aspects and embodiments as described herein, the device may be an audio apparatus and the levels may be the values of a sound volume when the sound volume is the setting target. Particularly in some further circumstances, in various aspects and embodiments as described herein, the device may be an automatic traveling apparatus that travels the local vehicle at a set speed and the levels may be the values of a set speed when the set speed is the setting target. Particularly in some further circumstances, in various aspects and embodiments as described herein, the device may be a power window apparatus and the levels may be the values of an opening degree representing the degree of opening of a window when the opening degree is the setting target.

The vehicle operation input apparatus described above may indicate the level setting display representing the setting of the levels in mutually different display aspects depending on whether the vehicle is stopped, so the occupant can recognize differences in the input form between a stop and a travel. This may result in the occupant to make an appropriate input for the device to operate in an intended manner. In other words, the vehicle operation input apparatus according to the above-stated aspect may assist the occupant to perform a technical task of controlling and/or operating a device installed in a vehicle by means of a continued and/or guided human-machine interaction process, which may lead to an improved operation of the device.

In some exemplary embodiments, in the vehicle operation input apparatus described above, the level setting display may include a plurality of first pictorial figures corresponding to the plurality of levels when the stop detection unit has detected that the vehicle is stopped and the level setting display may include a second pictorial figure that represents increase in the levels and a third pictorial figure that represents reduction in the levels when the stop detection unit has not detected that the vehicle is stopped, and the input operation may be a slide operation when the stop detection unit has detected that the vehicle is stopped or a tap operation when the stop detection unit has not detected that the vehicle is stopped. Particularly in some circumstances, in the vehicle operation input apparatus described above, the plurality of first pictorial figures may be arranged in parallel with each other along one direction so as to make the slide operation easy. Particularly in some further circumstances, the first pictorial figures may be rectangles having longer sides along a cross direction intersecting (for example, orthogonally intersecting) with the one direction.

In the vehicle operation input apparatus described above, when the vehicle is stopped, by indicating the level setting display using the plurality of first pictorial figures corresponding to the plurality of levels, the occupant can recognize that the input operation is performed by changing the levels continuously. In contrast, in the vehicle operation input apparatus described above, when the vehicle is traveling, by indicating the level setting display using the second pictorial figure indicating increase in the levels and the third pictorial figure indicating reduction in the levels, the occupant can recognize that the input operation is performed by changing the levels stepwise. Accordingly, the vehicle operation input apparatus can enable the occupant to make an appropriate input for controlling and/or operating the device in an intended manner, e.g., depending on whether the vehicle is stopped. This may lead to an improved operation of the device.

In some exemplary embodiments, in the vehicle operation input apparatus described above, the level setting display may be configured to, when the stop detection unit has detected that the vehicle is stopped, also function as a set level display representing a currently set level. The display control unit may be further configured to display, when the stop detection unit has detected that the vehicle is stopped, in a first display aspect, a first pictorial figure of the plurality of first pictorial figures that corresponds to the currently set level in the display unit, in a second display aspect that differs from the first display aspect, at least one first pictorial figure of the plurality of first pictorial figures that does not correspond to the currently set level in the display unit. Further, the display control unit may be further configured to, when the stop detection unit has not detected that the vehicle is stopped, further display: a line segment representing a range settable by the plurality of levels, in a third display aspect, a position in the line segment corresponding to the currently set level in the display unit, in a fourth display aspect that differs from the third display aspect, at least one position in the line segment not corresponding to the currently set level in the display unit.

Since the vehicle operation input apparatus described above can indicate the set level display representing the currently set level in the first pictorial figure when the vehicle is stopped and indicate the set level display using the line segments when the vehicle is traveling (in other words, the set level display may be indicated in mutually different display aspects depending on whether the vehicle is stopped), the occupant can recognize differences in the input form between a stop and a travel. Accordingly, the vehicle operation input apparatus can enable the occupant to make an appropriate input for controlling and/or operating the device in an intended manner, e.g., depending on whether the vehicle is stopped. This may lead to an improved operation of the device.

According to another aspect, a vehicle operation input method is provided for performing an input to a device that is installed in a vehicle and that is configured to achieve a predetermined function at a plurality of mutually different levels. The vehicle operation input method includes: a display step of displaying predetermined display content; an input position detection step of detecting a position on a display surface, the position being where an input operation is performed; an input content obtaining step of obtaining, as input content, display content displayed in the position detected in the input position detection step; and a stop detection step of detecting whether the vehicle is stopped, the display control step indicating a level setting display representing a setting of the levels in mutually different display aspects depending on whether the vehicle has been detected to be stopped in the stop detection step, the input operation having mutually different operation aspects depending on whether the vehicle has been detected to be stopped in the stop detection step.

Since the vehicle operation input method described above can indicate the level setting display representing the setting of the levels in mutually different display aspects depending on whether the vehicle has been detected to be stopped, the occupant can recognize differences in the input form between a stop and a travel. This may result in the occupant to make an appropriate input for the device to operate in an intended manner. In other words, the vehicle operation input method according to the above-stated aspect may assist the occupant to perform a technical task of controlling and/or operating a device installed in a vehicle by means of a continued and/or guided human-machine interaction process, which may lead to an improved operation of the device.

In some exemplary embodiments, in the method according to the above-stated aspect, the level setting display may include a plurality of first pictorial figures corresponding to the plurality of levels when the vehicle has been detected to be stopped. Further, the level setting display may include a second pictorial figure that represents increase in the levels and a third pictorial figure that represents reduction in the levels when the vehicle has not been detected to be stopped. Further, the input operation may be a slide operation when the vehicle has been detected to be stopped or a tap operation when the vehicle has not been detected to be stopped.

Further, in some exemplary embodiments, the vehicle has been detected to be stopped, the level setting display may also function as a set level display representing a currently set level. In such exemplary embodiments, the method according to the above-stated aspect may further include:
displaying, when the vehicle has been detected to be stopped,
   in a first display aspect, a first pictorial figure of the plurality of first pictorial figures that corresponds to the currently set level,
   in a second display aspect that differs from the first display aspect, at least one first pictorial figure of the plurality of first pictorial figures that does not correspond to the currently set level, and
further displaying, when the vehicle has not been detected to be stopped,
   a line segment representing a range settable by the plurality of levels,
   in a third display aspect, a position in the line segment corresponding to the currently set level,
   in a fourth display aspect that differs from the third display aspect, at least one position in the line segment not corresponding to the currently set level.

Further, according to yet another aspect, a computer program product is provided. The computer program product comprises computer-readable instructions that, when loaded and run on a computer, cause the computer to perform the method according to any one of the above-stated aspect and various embodiments thereof.

According to any one of the above-stated aspects and various embodiments thereof, operation of a device installed in a vehicle can be improved since the occupant can recognize differences in the input form between a stop and a travel, which can increase the likelihood of an appropriate input being made for the device to operate in an intended manner. In other words, any one of the above-stated aspects and various embodiments thereof may assist the occupant to perform a technical task of controlling and/or operating a device installed in a vehicle by means of a continued and/or guided human-machine interaction process, which may lead to an improved operation of the device.

### BRIEF DESCRIPTION OF THE DRAWINGS

**Fig. 1A** illustrates exemplary structure of a vehicle operation input apparatus according to an embodiment.
**Fig. 1B** illustrates an exemplary relationship between a first position in a display unit and a second position in an input position detection unit of a display unit.
**Fig. 2** illustrates, as an example, the arrangement of the display unit and the input position detection unit in a vehicle interior of the vehicle operation input apparatus illustrated in Fig. 1.
**Fig. 3** illustrates, as an example, an input screen in the case of a stop displayed in the display unit of the vehicle operation input apparatus illustrated in Fig. 1.
**Fig. 4** illustrates, as an example, an input screen in the case of traveling displayed in the display unit of the vehicle operation input apparatus illustrated in Fig. 1.
**Fig. 5** is a flowchart illustrating an exemplary operation of the vehicle operation input apparatus illustrated in Fig. 1.

### DETAILED DESCRIPTION OF EMBODIMENTS

One or a plurality of embodiments of the present disclosure will be described below with reference to the drawings. However, the scope of the present invention is defined by the claims and is not limited to the disclosed specific embodiments. It should be noted here that components denoted by identical reference numerals in the drawings are identical components and descriptions thereof are omitted as necessary. In this specification, non-subscripted reference numerals are used when components are collectively represented and subscripted numerals are used when individual components are represented.

A vehicle operation input apparatus according to an exemplary embodiment may perform an input to a device (e.g., including hardware and software) that is installed in, for example, a vehicle such as an automobile or a railroad vehicle and that is configured to achieve predetermined functions at a plurality of mutually different levels. This vehicle operation input apparatus may include a display unit that performs display, an input position detection unit that has an operation surface associated with a first position on a display surface of the display unit and detects a second position on the operation surface in which an input operation is performed (in other words, the second position may be a position where the input operation is performed), a display control unit that controls the display unit, an input content obtaining unit that obtains, as input content, display content displayed in the first position that corresponds to the second position detected by the input position detection unit, and a stop detection unit that detects whether the vehicle is stopped. In addition, the display control unit may indicate a level setting display (e.g., Item) for representing the setting of the levels in the display unit in mutually different display aspects depending on whether the stop detection unit has detected that the vehicle is stopped, and the input operation may have mutually different operation aspects that depend on whether the vehicle is stopped. The vehicle operation input apparatus described above will be described more specifically below.

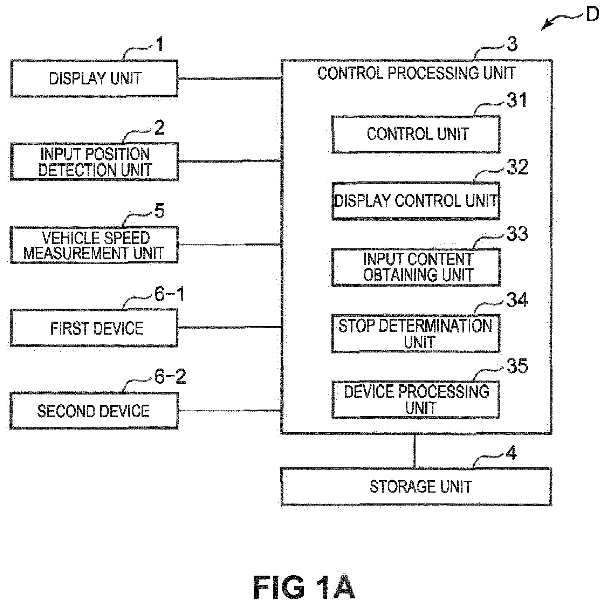

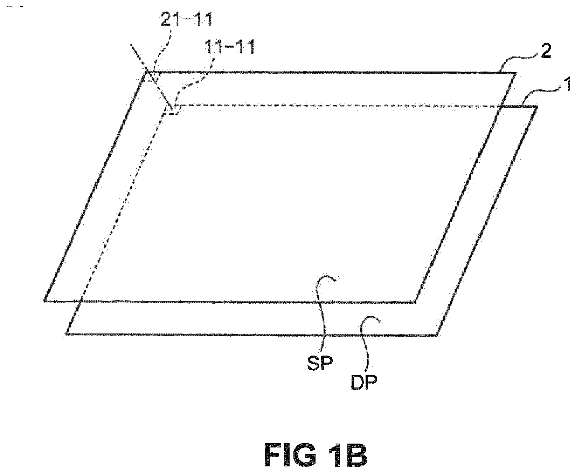

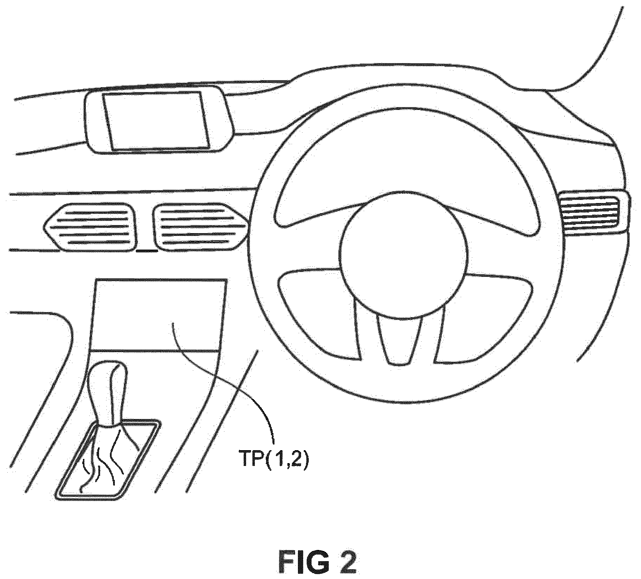

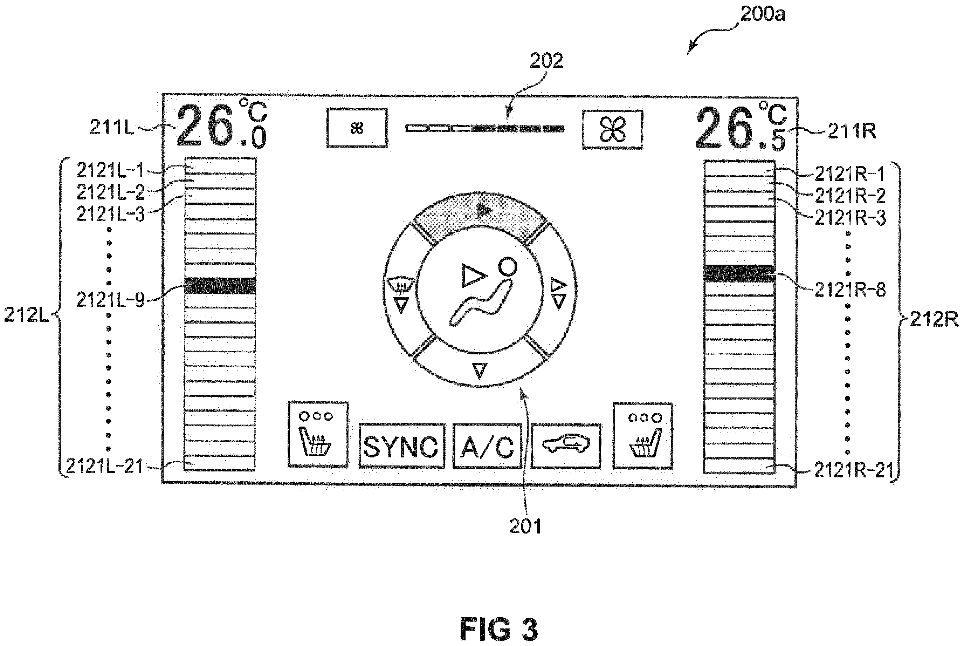

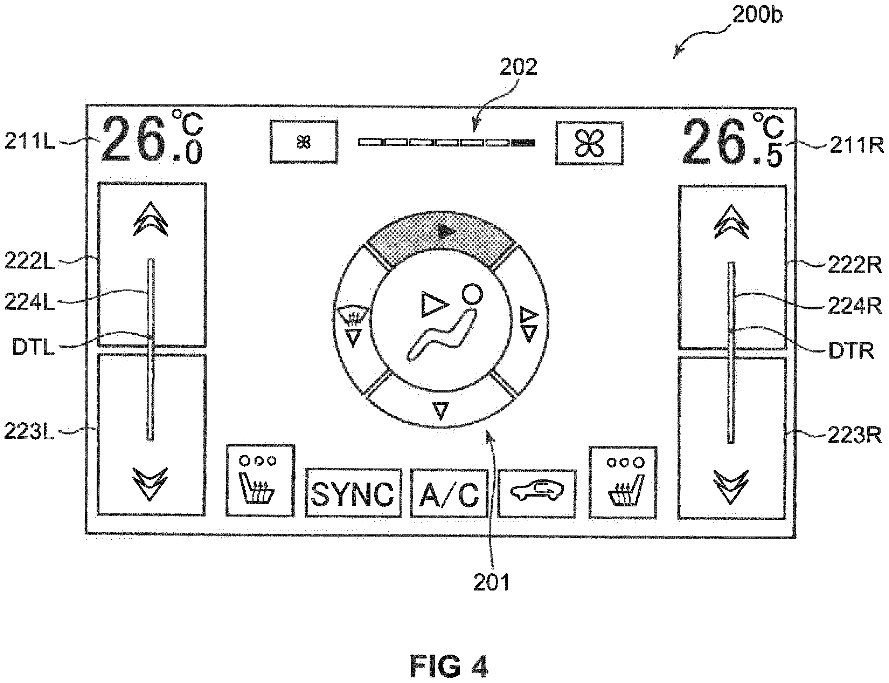

Fig. 1A is a block diagram illustrating exemplary structure of the vehicle operation input apparatus according to the embodiment. Fig. 1B illustrates an exemplary relationship between the first position in the display unit and the second position in the input position detection unit. Fig. 2 illustrates, as an example, the arrangement of the display unit and the input position detection unit in the vehicle interior of the vehicle operation input apparatus illustrated in Fig. 1. Fig. 3 illustrates, as an example, the input screen in the case of a stop displayed in the display unit of the vehicle operation input apparatus illustrated in Fig. 1. Fig. 4 illustrates, as an example, the input screen in the case of traveling displayed in the display unit of the vehicle operation input apparatus illustrated in Fig. 1.

As illustrated in, for example, Fig. 1A, a vehicle operation input apparatus D according to the embodiment may include a display unit 1, an input position detection unit 2, a control processing unit 3, a storage unit 4, and a vehicle speed measurement unit 5. Further, the vehicle operation input apparatus D may perform inputs to one or a plurality of devices 6 (for instance, first and second devices 6-1 and 6-2 in the example illustrated in Fig. 1A).

The first and second devices 6-1 and 6-2 may be apparatuses (e.g., including hardware and software) that are installed in a vehicle such as, for example, an automobile or a railroad vehicle and may be configured to achieve predetermined functions at a plurality of mutually different levels. The devices 6 may be appropriate devices as described above. Examples of the devices 6 may include, but are not limited to, an air conditioning apparatus for which the airflow amount and the temperature can be set at a plurality of levels, an audio apparatus for which the sound volume can be set at a plurality of levels, an automatic travel apparatus for which the speed can be set at a plurality of levels so as to travel the local device at the set speed, a power window apparatus for which the opening degree (and/or close degree) can be set at a plurality of levels, and/or the like. The first and second devices 6-1 and 6-2 may be connected to the control processing unit 3.

The display unit 1 may be an apparatus that is connected to the control processing unit 3 and may perform display according to control by the control processing unit 3. The display unit 1 may be, for example, a liquid crystal display (LCD), an organic EL display, or the like.

The input position detection unit 2 may be an apparatus that is connected to the control processing unit 3 and detects the position (e.g., second position), on the operation surface, in which an input operation is performed by the user such as an occupant (e.g., a driver or a passenger of the vehicle). The input position detection unit 2 may be, for example, a position input apparatus that detects a contact position via a resistance film method or a capacitance method and inputs the detected position. The input position detection unit 2 may output the detected second position to the control processing unit 3. The second position on the operation surface may be associated with the position (e.g., first position) on the display surface of the display unit 1 in advance. For example, in plan view of Fig. 1B, a dot 21-11 at the upper left corner of an operation surface SP may be associated with a pixel 11-11 at the upper left corner of a display surface DP. Based on the correspondence, a plurality of dots 21-mn on the operation surface SP may be associated with a plurality of pixels 11-kl on the display surface DP, respectively (k, 1, m, and n are positive integers). It should be noted here that the dot 21-11 at the upper left corner of the operation surface SP and the pixel 11-11 at the upper left corner of the display surface DP are illustrated in Fig. 1B and the other dots 21 and the other pixels 11 are omitted. In addition, the first space resolution of the plurality of pixels 11 on the display surface DP and the second space resolution of the plurality of dots 21 on the operation surface SP may be identical to each other (in other words, the first area equals the second area) or may be different from each other (in other words, the first area does not equal the second area). When the first space resolution and the second space resolution are different from each other, the first positions may correspond to the second positions on a many-to-one basis or a one-to-many basis.

When the first positions (e.g., the first positions of the plurality of pixels 11 in the example described above) on the display surface of the display unit 1 may be associated with the second positions (e.g., the second positions of the plurality of dots 21 in the example described above) on the operation surface of the input position detection unit 2, respectively, the display unit 1 and the input position detection unit 2 may be disposed in different positions in the vehicle interior. In the exemplary embodiment, however, the operation surface is disposed on the display surface and the input position detection unit 2 is integrated with the display unit 1 to form a so-called touch panel (e.g., touch screen). A touch panel TP including the display unit 1 and the input position detection unit 2 may be a member that extends toward a dashboard from a center console that separates a driver seat from a passenger seat in the vehicle interior as illustrated in, for example, Fig. 2. Further, the touch panel TP may be disposed on an inclined surface of the member inclined in side view so that the operation surface SP and the display surface DP face outside. It should be noted here that the operation surface SP of the input position detection unit 2 is illustrated separately from the display surface DP of the display unit 1 for convenience of description of the correspondence between the first positions and the second positions in Fig. 1B.

In addition, in the exemplary embodiment, the input operation may have different operation aspects depending on whether the local vehicle is stopped. More specifically, for example, the input operation may be a slide operation when the vehicle is stopped or a tap operation when the vehicle is not stopped.

Returning to Fig. 1A, the vehicle speed measurement unit 5 may be an apparatus that is connected to the control processing unit 3 and may measure the speed of the local vehicle according to control by the control processing unit 3. The vehicle speed measurement unit 5 may be, for example, a wheel speed sensor that has a rotary encoder and peripheral circuits thereof and that measures the wheel speed (e.g., the rotational speed of the wheel) based on the amount of change in rotation of the wheel (e.g., wheel shaft) per unit time. The vehicle speed measurement unit 5 may output the measured wheel speed to the control processing unit 3. It should be noted here that the vehicle speed can be obtained from the wheel speed based on the size of the wheel.

The storage unit 4 may be a circuit that is connected to the control processing unit 3 and may store various types of predetermined programs and various types of predetermined data according to control by the control processing unit 3. The various types of predetermined programs may include control processing programs such as, for example, a control program that controls the units 1, 2, 4, and/or 5 of the vehicle operation input apparatus D according to the functions of these units, a display control program that controls the display unit 1, an input content obtaining program that obtains, as input content, the display content indicated in the first position on the display surface corresponding to the second position on the operation surface detected by the input position detection unit 2, a stop determination program that determines whether the local vehicle is stopped based on the vehicle speed measured by the vehicle speed measurement unit 5, and/or a device processing program that processes the device 6 that is the setting target at the level obtained by the input content obtaining program. The various types of predetermined data may include necessary data for executing individual programs, such as screen information that represents a screen to be displayed in the display unit 1 and correspondence information that represents the correspondence between the first positions on the display surface of the display unit 1 and the second positions on the operation surface of the input position detection unit 2. The storage unit 4 may include, for example, a ROM (Read Only Memory), which is a non-volatile storage device, an EEPROM (Electrically Erasable Programmable Read Only Memory), which is a rewritable non-volatile storage device, and/or the like. In addition, the storage unit 4 may include a RAM (Random Access Memory) used for a so-called working memory for the control processing unit 3 in which data and the like generated during execution of the predetermined programs are stored.

The control processing unit 3 may be a circuit that controls the units 1, 2, 4, and/or 5 of the vehicle operation input apparatus D according to the functions of these units and receives an input of the input content for the predetermined device 6 installed in the vehicle. The control processing unit 3 may include, for example, a CPU (Central Processing Unit) and peripheral circuits thereof. The control processing unit 3 may be functionally configured by a control unit 31, a display control unit 32, an input content obtaining unit 33, a stop determination unit 34, and/or a device processing unit 35 by executing the control processing programs.

The control unit 31 may entirely control the vehicle operation input apparatus D by controlling the units 1, 2, 4, and/or 5 of the vehicle operation input apparatus D according to the functions of these units.

The input content obtaining unit 33 may obtain, as input content, the display content displayed in the first position on the display surface corresponding to the second position on the operation surface detected by the input position detection unit 2. The input content obtaining unit 33 may notify the display control unit 32 and the device processing unit 35 of the obtained input content.

The stop determination unit 34 may determine whether the local vehicle is stopped based on the vehicle speed measured by the vehicle speed measurement unit 5. More specifically, when the wheel speed measured by the vehicle speed measurement unit 5 is 0, the stop determination unit 34 may determine that the vehicle is stopped. In contrast, when the wheel speed measured by the vehicle speed measurement unit 5 is nonzero, the stop determination unit 34 may determine that the vehicle is not stopped, in other words, the vehicle is traveling. The stop determination unit 34 may notify the display control unit 32 of the determination result (e.g., the vehicle is stopped or not stopped (in other words, the vehicle is traveling)).

The device processing unit 35 may process the device 6 that is the setting target at the level obtained by the input content obtaining unit 33. For example, when the device 6 itself has a control function, the device processing unit 35 may output, as the control object, the level obtained by the input content obtaining unit 33 to the device 6 to operate the device 6 that is the setting target at the level obtained by the input content obtaining unit 33. Alternatively, for example, when the device 6 does not have a control function, the device processing unit 35 may control the device 6 that is the setting target so as to operate the device 6 at the level obtained by the input content obtaining unit 33.

The display control unit 32 may control the display unit 1. More specifically, in the embodiment, the display control unit 32 may display the level setting display representing the setting of the levels in the first position on the display surface of the display unit 1 in mutually different display aspects depending on whether the stop determination unit 34 has determined that the vehicle is stopped. The level setting display may include a plurality of first pictorial figures corresponding to the plurality of levels when the stop determination unit 34 has determined that the vehicle is stopped. The level setting display may include a second pictorial figure representing increase in the levels and a third pictorial figure representing reduction in the levels when the stop determination unit 34 has determined that the vehicle is not stopped.

A more specific description of an example will be given below when the device 6-1 is an air conditioning apparatus 6-1 and the levels are the values of the temperature in the case in which the setting target is the temperature.

In one example, the storage unit 4 may store information representing an input screen 200a in Fig. 3 in the case of a stop as an example of the screen information. Further, when the stop determination unit 34 has determined that the vehicle is stopped, the display control unit 32 may display the input screen 200a in the case of the stop in the display unit 1 with reference to the screen information in the storage unit 4. The input screen 200a may be displayed in the display unit 1 when the stop determination unit 34 has determined that the vehicle is stopped and may be used to input the type of a blowout port, the value of the temperature, and/or the value of the airflow amount to the air conditioning apparatus 6-1 when the blowout port, the temperature, and/or the airflow amount are the setting targets. The input screen 200a may include, for example, blowout port setting display 201, airflow amount setting display 202, first driver seat side set temperature display (also referred to as "first D-set temperature display") 211R, driver seat side temperature setting display (also referred to as "D-temperature setting display") 212R, first passenger seat side set temperature display (also referred to as "first A-set temperature display") 211L, and/or passenger seat side temperature setting display (also referred to as "A-temperature setting display") 212L.

The blowout port setting display 201 may be used to set the types of blowout ports from which conditioned air having a conditioned temperature and a conditioned airflow amount is blown out. The types of blowout ports may include, but are not limited to, for example, a first blowout port for blowing air toward the feet, a second blowout port for blowing air toward the upper body, a third blowout port for defroster for blowing air toward the window, and/or the like. One or more types of the blowout ports may be selected by an input operation on the blowout port setting display 201. The blowout port setting display 201 may be indicated substantially at the center of the display surface of the display unit 1.

The airflow amount setting display 202 may be used to set the level of the airflow amount. The airflow amount may be set by an input operation on the airflow amount setting display 202. The airflow amount setting display 202 may be indicated above the blowout port setting display 201 in the upper part on the display surface of the display unit 1.

The first D-set temperature display 211R may indicate the currently set temperature on the driver seat side as the display content (e.g., value). Particularly in the specific example illustrated in Fig. 3, the currently set temperature is "26.5°C". The first D-set temperature display 211R may be indicated in the upper part (more specifically, substantially at the corner) of the other side part on the display surface of the display unit 1.

The D-temperature setting display 212R may represent the value of a temperature set on the driver seat side as the display content (e.g., setting content). The D-temperature setting display 212R may include a plurality of first pictorial figures corresponding to settable temperature values. Since an input operation during a stop may be a slide operation as described above, a number of the first pictorial figures that depend on a settable temperature range and a predetermined setting interval (e.g., a specified setting interval) may be arranged in parallel with each other along one direction so as to make a slide operation easy. The first pictorial figures may be rectangles having longer sides along a cross direction intersecting (for example, orthogonally intersecting) with the one direction. Particularly in the specific example illustrated in Fig. 3, the temperature of the air conditioning apparatus 6-1 can be set to a value, for example, from 30.0°C (e.g., High) to 20.0°C (e.g., Low) at intervals of 0.5°C. Accordingly, the D-temperature setting display 212R may include 21 (e.g., 1st to 21st) rectangles 2121R-1 to 2121R-21 that are arranged in parallel with each other along the up-down direction and have longer sides along the left-right direction orthogonal to the up-down direction. The 1st to 21st rectangles 2121R-1 to 2121R-21 may correspond to the values of the temperatures from 30.0°C to 20.0°C at intervals of 0.5°C, respectively. The D-temperature setting display 212R may be indicated below the first D-set temperature display 211R on the other side (e.g., driver seat side) of the blowout port setting display 201 in the other side part on the display surface of the display unit 1.

In addition, in the exemplary embodiment, the D-temperature setting display 212R may also function as the set temperature display representing the currently set temperature. For example, the first pictorial figure corresponding to the value of the currently set temperature of the plurality of first pictorial figures may be indicated in a first display aspect in the display unit 1. Further, for example, the first pictorial figures not corresponding to the currently set level of the plurality of first pictorial figures may be indicated in a second display aspect which differs from the first display aspect in the display unit 1. Particularly in the specific example illustrated in Fig. 3, the set temperature is 26.5°C as described above, the 8th rectangle 2121R-8 is displayed accordingly in a first intensity (e.g., black in Fig. 3) as the first display aspect and the remaining 1st to 7th rectangles 2121R-1 to 2121R-7 and 9th to 21st rectangles 2121R-9 to 2121R-21 are displayed in a second intensity (e.g., white in Fig. 3) as the second display aspect that differs from the first intensity.

Since the first A-set temperature display 211L and the A-temperature setting display 212L may be the same as the first D-set temperature display 211R and the D-temperature setting display 212R except that the driver seat side and the other side (for the first D-set temperature display 211R and the D-temperature setting display 212R) may respectively correspond to the passenger seat side and one side (for the first A-set temperature display 211L and the A-temperature setting display 212L), descriptions thereof are omitted.

The storage unit 4 may store information representing an input screen 200b in Fig. 4 in the case of traveling as an example of the screen information. Further, when the stop determination unit 34 has determined that the vehicle is not stopped (in other words, traveling), the display control unit 32 may display the input screen 200b in the case of the traveling in the display unit 1 with reference to the screen information in the storage unit 4. The input screen 200b may be displayed in the display unit 1 when the stop determination unit 34 has determined that the vehicle is not stopped. Further in this case, this screen may be used to input the types of a blowout ports, the value of the temperature, and/or the value of the airflow amount for the air conditioning apparatus 6-1 when the blowout port, the temperature, and/or the airflow amount are setting targets. The input screen 200b may include, for example, the blowout port setting display 201, the airflow amount setting display 202, the first D-set temperature display 211R, driver seat side temperature rise setting display (also referred to as "D-temperature rise setting display") 222R, driver seat side temperature drop setting display (also referred to as "D-temperature drop setting display") 223R, second driver seat side set temperature display (also referred to as "second D-set temperature display") 224R, the first A-set temperature display 211L, passenger seat side temperature rise setting display (also referred to as "A-temperature rise setting display") 222L, passenger seat side temperature drop setting display (also referred to as "A-temperature drop setting display") 223L, and/or second passenger seat side set temperature display (also referred to as "second A-set temperature display") 224L.

Since the blowout port setting display 201, the airflow amount setting display 202, the first D-set temperature display 211R, and the first A-set temperature display 211L on the input screen 200b in the case of traveling may be the same as the blowout port setting display 201, the airflow amount setting display 202, the first D-set temperature display 211R, and the first A-set temperature display 211L on the input screen 200a in the case of a stop, descriptions thereof are omitted.

The driver seat side temperature rise setting display (also referred to as "D-temperature rise setting display") 222R may represent increase in temperature as the display content (e.g., setting content) on the driver seat side. More specifically, the D-temperature rise setting display 222R may be the second pictorial figure representing increase in temperature. Since an input operation during traveling may be a tap operation as described above, the second pictorial figure may be, for example, a rectangle with a size larger than a finger so as to make a tap operation easy. In this rectangle, the first pictorial symbol including two partially overlapping up-arrows that symbolically represent increase (e.g., rise) in temperature is present. Particularly in the specific example illustrated in Fig. 4, the temperature may be raised from the currently set temperature to the maximum temperature by a predetermined value (e.g., a specified value, such as, for example, 0.5°C). The D-temperature rise setting display 222R may be indicated in the upper half of the other side on the display surface of the display unit 1 on the other side (e.g., driver seat side) of the blowout port setting display 201.

The driver seat side temperature drop setting display (also referred to as "D-temperature drop setting display") 223R may indicate reduction in the temperature on the driver seat side as the display content (e.g., setting content). More specifically, the D-temperature drop setting display 223R may be the third pictorial figure representing reduction in temperature. The third pictorial figure may be, for example, a rectangle with a size larger than a finger so as to make a tap operation easy. This rectangle may contain the second pictorial symbol including two partially overlapping down-arrows that symbolically represent reduction (e.g., drop) in temperature. Particularly in this specific example illustrated in Fig. 4, the temperature may be reduced from the currently set temperature to the minimum temperature by a predetermined value (e.g., a specified value, such as, for example, 0.5°C). The D-temperature drop setting display 223R may be indicated in the lower half of the other side part on the display surface of the display unit 1 on the other side (e.g., driver seat side) of the blowout port setting display 201.

The second driver seat side set temperature display (also referred to as "second D-set temperature display") 224R may indicate the currently set temperature on the driver seat side as the display content (e.g., setting content) using a pictorial symbol. Particularly in the specific example illustrated in Fig. 4, the second set temperature display 224R may have a line segment 224R representing the settable temperature range on the driver seat side. Further, in the line segment 224R, a position DTR corresponding to the currently set temperature in the settable temperature range may be displayed in a third display aspect (for example, a third intensity (e.g., black in Fig. 4)). The positions not corresponding to the currently set temperature (e.g., positions in the line segment 224R except the position DTR) may be displayed in a fourth display aspect which differs from the third display aspect (for example, a fourth intensity (e.g., white in Fig. 4) that differs from the third intensity). The line segment 224R may extend vertically between the first pictorial symbol of the D-temperature rise setting display 222R and the second pictorial symbol of the D-temperature drop setting display 223R so as to overlap with the D-temperature rise setting display 222R and the D-temperature drop setting display 223R.

Since the A-temperature rise setting display 222L, the A-temperature drop setting display 223L, and the second A-set temperature display 224L may be the same as the D-temperature rise setting display 222R, the D-temperature drop setting display 223R, and the second D-set temperature display 224R except that the driver seat side and the other side (for the D-temperature rise setting display 222R, the D-temperature drop setting display 223R, and the second D-set temperature display 224R) may respectively correspond to the passenger seat side and one side (for the A-temperature rise setting display 222L, the A-temperature drop setting display 223L, and the second A-set temperature display 224L), descriptions thereof are omitted.

It should be noted here that the vehicle speed measurement unit 5 and the stop determination unit 34 may be considered as examples of the stop detection unit that detects whether the vehicle is stopped. The D-temperature setting display 212R, the A-temperature setting display 212L, the D-temperature rise setting display 222R, the D-temperature drop setting display 223R, the A-temperature rise setting display 222L, and the A-temperature drop setting display 223L may be considered as examples of the level setting display representing the setting of the levels.

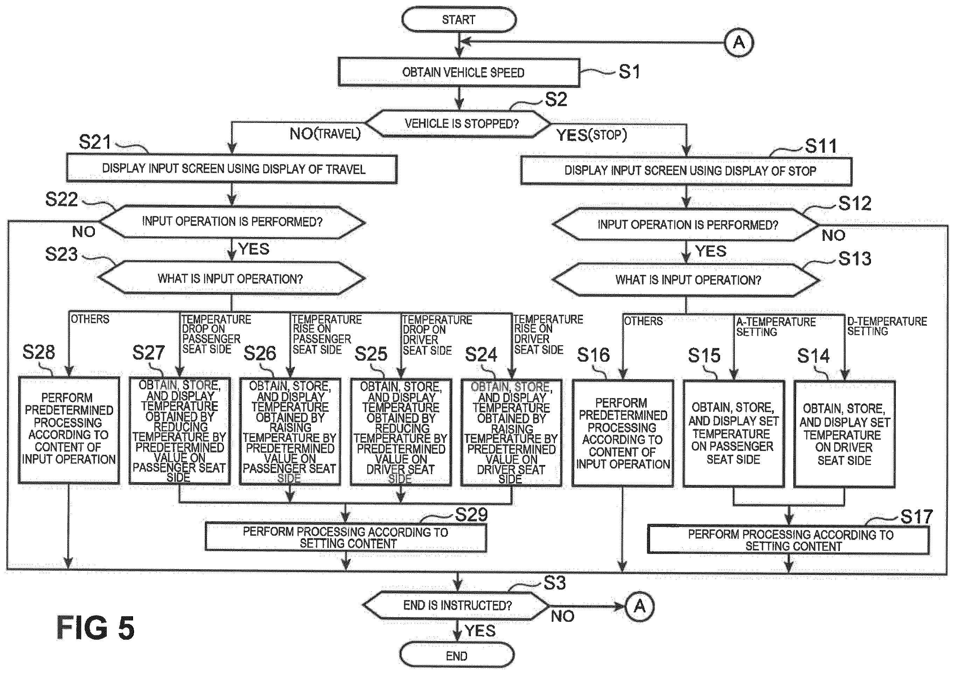

Next, exemplary operation of the exemplary embodiment will be described. Fig. 5 is a flowchart illustrating exemplary operation of the vehicle operation input apparatus illustrated in Fig. 1.

When the vehicle starts operating, the vehicle operation input apparatus D described above may initialize the necessary units and start these units. In the control processing unit 3, the control unit 31, the display control unit 32, the input content obtaining unit 33, the stop determination unit 34, and the device processing unit 35 may be functionally configured by executing the control programs thereof. Then, the vehicle operation input apparatus D may cause the display control unit 32 of the control processing unit 3 to display, for example, the input screen 200a in the case of a stop in Fig. 3 in the display unit 1 with reference to the screen information in the storage unit 4.

Then, in Fig. 5, the vehicle operation input apparatus D may cause the control processing unit 3 to obtain the vehicle speed (e.g., wheel speed in the exemplary embodiment) of the local vehicle from the vehicle speed measurement unit 5 (S1).

Next, the vehicle operation input apparatus D may cause the stop determination unit 34 of the control processing unit 3 to determine whether the local vehicle is stopped based on the vehicle speed measured by the vehicle speed measurement unit 5 (S2). When the vehicle is determined to be stopped as a result of this determination (Yes (stop)), the vehicle operation input apparatus D may cause the control processing unit 3 to execute a process S11. In contrast, when the vehicle is not determined to be stopped as a result of the determination (No (traveling)), the vehicle operation input apparatus D may cause the control processing unit 3 to execute a process S21.

In the process S11, the vehicle operation input apparatus D may cause the display control unit 32 of the control processing unit 3 to display, for example, the input screen 200a in the case of a stop in Fig. 3 in the display unit 1 and then execute a process S12.

In the process S12, the vehicle operation input apparatus D may cause the control processing unit 3 to determine whether an input operation has been performed. As a result of this determination, when an input operation has been performed (Yes), the control processing unit 3 may execute a process S13. In contrast, when an input operation has not been performed (No), the control processing unit 3 may execute a process S3.

In the process S13, the vehicle operation input apparatus D may cause the input content obtaining unit 33 of the control processing unit 3 to determine the content of the input operation. More specifically, the input content obtaining unit 33 may determine the display content displayed in the first position on the display surface corresponding to the second position on the operation surface detected by the input position detection unit 2. More specifically, when an input operation is performed via a sliding operation by, for example, a finger of the user in the second position on the operation surface corresponding to the first position on the display surface indicating the D-temperature setting display 212R, the input content obtaining unit 33 may determine an input operation on the D-temperature setting display 212R. In such a case (e.g., D-temperature setting), the vehicle operation input apparatus D may cause the control processing unit 3 to execute a process S14 and then execute a process S17. Similarly, when an input operation is performed on the A-temperature setting display 212L, the vehicle operation input apparatus D may determine an input operation on the A-temperature setting display 212L. In this case (e.g., A-temperature setting), the vehicle operation input apparatus D may execute a process S15 and then execute the process S17. In case the vehicle operation input apparatus D determines an input operation on display (for example, an input operation on the blowout port setting display 201, an input operation on the airflow amount setting display 202, etc.) other than the D-temperature setting display 212R and the A-temperature setting display 212L (e.g., others), the vehicle operation input apparatus D may cause the control processing unit 3 to execute a process S16 for executing appropriate predetermined processing (e.g., processing specified before executing step S16) that depends on the content of the input operation and then execute the process S3.

In the process S14, the vehicle operation input apparatus D may cause the input content obtaining unit 33 to obtain, as the input content, the value of the temperature displayed in the rectangle 2121R in which an input operation has been performed among the 1st to 21st rectangles 2121R-1 to 2121R-21 in the D-temperature setting display 212R on the driver seat side and store the obtained value in the storage unit 4. Then, to display a new currently set temperature, the vehicle operation input apparatus D may cause the display control unit 32 of the control processing unit 3 to display the rectangle 2121R in which an input operation has been performed in the first intensity as the first display aspect and display the remaining rectangles 2121R excluding the rectangle 2121R in which an input operation has been performed in the second intensity as the second display aspect.

Although the vehicle operation input apparatus D may perform the steps described above on the driver seat side in the process S14 described above, the vehicle operation input apparatus D may perform steps similar to those in the process S14 described above on the passenger seat side, in the process S15.

In the process S17 that follows the process S14 or the process S15, the vehicle operation input apparatus D may cause the device processing unit 35 of the control processing unit 3 to process the air conditioning apparatus 6-1 according to the setting content stored in the storage unit 4. For example, in the process S17 that follows the process S15, the device processing unit 35 may cause the air conditioning apparatus 6-1 to blow the conditioned air at the new currently set temperature on the passenger seat side.

In contrast, in the process S21, the vehicle operation input apparatus D may cause the display control unit 32 of the control processing unit 3 to display the input screen 200b in Fig. 4 when the vehicle is not stopped (in other words, traveling) in the display unit 1 and then execute a process S22.

In this process S22, the vehicle operation input apparatus D may cause the control processing unit 3 to determine whether an input operation has been performed. When an input operation has been performed (Yes) as a result of this determination, the control processing unit 3 may execute a process S23. In contrast, when an input operation has not been performed (No) as a result of this determination, the control processing unit 3 may execute the process S3.

In this process S23, the vehicle operation input apparatus D may cause the input content obtaining unit 33 of the control processing unit 3 to determine the content of the input operation. More specifically, the input content obtaining unit 33 may determine the display content displayed in the first position on the display surface corresponding to the second position on the operation surface detected by the input position detection unit 2. More specifically, when an input operation is performed via, for example, a tap operation by a finger of the user in the second position on the operation surface corresponding to the first position on the display surface on which the D-temperature rise setting display 222R is indicated, the input content obtaining unit 33 may determine that an input operation on the D-temperature rise setting display 222R. In such a case (e.g., driver seat side temperature rise), the vehicle operation input apparatus D may cause the control processing unit 3 to execute a process S24 and then execute a process S29. Similarly, when an input operation is performed on the D-temperature drop setting display 223R, the vehicle operation input apparatus D may determine an input operation on the D-temperature drop setting display 223R. In such a case (e.g., driver seat side temperature drop), the vehicle operation input apparatus D may execute a process S25 and then execute the process S29. When an input operation is performed on the A-temperature rise setting display 222L, the vehicle operation input apparatus D may determine an input operation on the A-temperature rise setting display 222L. In such a case (e.g., passenger seat side temperature rise), the vehicle operation input apparatus D may execute a process S26 and then execute the process S29. When an input operation is performed on the A-temperature drop setting display 223L, the vehicle operation input apparatus D may determine an input operation on the A-temperature drop setting display 223L. In such a case (e.g., passenger seat side temperature drop), the vehicle operation input apparatus D may executes a process S27 and then execute the process S29. When the vehicle operation input apparatus D determines an input operation on display (for example, an input operation on the blowout port setting display 201, an input operation on the airflow amount setting display 202, etc.) other than the D-temperature rise setting display 222R, the D-temperature drop setting display 223R, the A-temperature rise setting display 222L, and the A-temperature drop setting display 223L (e.g., Others), the vehicle operation input apparatus D may cause the control processing unit 3 to execute a process S28 for executing predetermined appropriate processing (e.g., processing specified before executing step S28) according to the content of the input operation and then execute the process S3.

In the process S24, the vehicle operation input apparatus D may first cause the input content obtaining unit 33 to obtain, as the input content, the increase in temperature on the driver seat side indicated in the D-temperature rise setting display 222R on which an input operation has been performed and store the obtained increase in the storage unit 4. More specifically, in the exemplary embodiment, the input content obtaining unit 33 may obtain a new currently set temperature by adding a predetermined value (e.g., a specified value) to the currently set temperature until the maximum temperature is reached on the driver seat side (e.g., (currently set temperature) <— (currently set temperature) + (predetermined value) where (currently set temperature) ≤ (maximum temperature)). Then, to display the new currently set temperature, the vehicle operation input apparatus D may cause the display control unit 32 of the control processing unit 3 to display the first D-set temperature display 211R and the second D-set temperature display 224R using the new currently set temperature.

In the process S25, the vehicle operation input apparatus D may first cause the input content obtaining unit 33 to obtain, as the input content, the reduction in temperature on the driver seat side displayed in the D-temperature drop setting display 223R on which an input operation has been performed and store the obtained reduction in the storage unit 4. More specifically, in the embodiment, the input content obtaining unit 33 may obtain a new currently set temperature by subtracting a predetermined value (e.g., a specified value) from the currently set temperature until the minimum temperature is reached on the driver seat side (e.g., (currently set temperature) <— (currently set temperature) - (predetermined value) where (currently set temperature) ≥ (minimum temperature)). Then, to display the new currently set temperature, the vehicle operation input apparatus D may cause the display control unit 32 of the control processing unit 3 to display the first D-set temperature display 211R and the second D-set temperature display 224R using the new currently set temperature.

Although the vehicle operation input apparatus D may perform the steps described above on the driver seat side in the process S24 and the process S25 described above, the vehicle operation input apparatus D may perform steps similar to those in the process S24 and the process S25 described above on the passenger seat side, in the process S26 and the process S27.

In the process S29 that follows the process S24 or the process S27, the vehicle operation input apparatus D may cause the device processing unit 35 of the control processing unit 3 to process the air conditioning apparatus 6-1 according to the setting content stored in the storage unit 4, as in the process S17 described above. For example, in the process S29 that follows the process S24, the device processing unit 35 may cause the air conditioning apparatus 6-1 to blow air having been conditioned at the new currently set temperature on the driver seat side. In addition, for example, in the process S29 that follows the process S27, the device processing unit 35 may cause the air conditioning apparatus 6-1 to blow air having been conditioned at the new currently set temperature on the passenger seat side.

Then, in the process S3, the vehicle operation input apparatus D may determine whether the end of the operation of the vehicle is instructed based on an input operation of a switch for turning on and off the operation of the vehicle or the like. As a result of this determination, when the end of the operation is instructed (Yes), the vehicle operation input apparatus D may end this processing and end the operation. In contrast, when the end of the operation is not instructed (No), the vehicle operation input apparatus D may return the processing to the process S1.

Since the vehicle operation input apparatus may operate as described above, when, for example, the occupant performs a slide operation on the D-temperature setting display 212R during a stop, the vehicle operation input apparatus D may repeatedly perform the process S1, the process S2, the process S11, the process S12, the process S13, the process S14, the process S17, and the process S3 according to the slide operation. This may change the rectangle 2121R of the D-temperature setting display 212R displayed in the first intensity so as to follow the slide operation and change the currently set temperature as to follow the slide operation. In addition, when, for example, the occupant performs a plurality of tap operations on the D-temperature drop setting display 223R during traveling, the vehicle operation input apparatus D may repeatedly perform the process S1, the process S2, the process S21, the process S22, the process S23, the process S25, the process S29, and the process S3 a number of times equal to the number of tap operations. This may change the position DTR displayed in the third intensity every tap operation and changes the currently set temperature every tap operation.

As described above, the vehicle operation input apparatus D according to the exemplary embodiment and/or the vehicle operation input method implemented therein may indicate the level setting display representing the setting of the levels in mutually different display aspects depending on whether the vehicle is stopped. In the example described above, when the vehicle is stopped, the D-temperature setting display 212R (that is an example of the level setting display) may be indicated in a display aspect having the plurality of first pictorial figures (e.g., rectangles 2121R in the example illustrated in Fig. 3) in the display unit 1 on the driver seat side, and the A-temperature setting display 212L (that is another example of the level setting display) may be indicated in a display aspect having the plurality of first pictorial figures (e.g., rectangles 2121L in the example illustrated in Fig. 3) in the display unit 1 on the passenger seat side. In contrast, when the vehicle is traveling, the D-temperature rise setting display 222R and the D-temperature drop setting display 223R (that are other examples of the level setting display) may be indicated in a display aspect having second and third pictorial figures (e.g., rectangles in the example illustrated in Fig. 4) in the display unit 1 on the driver seat side, and the A-temperature rise setting display 222L and the A-temperature drop setting display 223L (that are other examples of the level setting display) may be indicated in a display aspect having second and third pictorial figures in the display unit 1 on the passenger seat side. Accordingly, in the vehicle operation input apparatus D and/or the vehicle operation input method described above, the occupant can recognize differences in the input form between a stop and a travel. Thus, the vehicle operation input apparatus D and/or the vehicle operation input method described above can assist the occupant to make an appropriate input for a device installed in the vehicle to operate in an intended manner. This may lead to an improved operation of the device installed in the vehicle.

For instance, since the touch type vehicle operation input apparatus disclosed in PTL 1 uses the same display between a travel and a stop even though changes in control parameters are different between a travel and a stop, the occupant may have a feeling of strangeness or may feel difficulty in operation. However, since the occupant can recognize differences in the input form between a stop and a travel in the vehicle operation input apparatus D and/or the vehicle operation input method, such a feeling of strangeness experienced by the occupant or such difficulty in operation felt by the occupant can be reduced. This can increase the likelihood of the occupant making an appropriate input for a device installed in the vehicle to operate in an intended manner, which can result in an improved operation of the device.

In the vehicle operation input apparatus D and/or the vehicle operation input method, when the vehicle is stopped, by indicating the level setting display including the plurality of first pictorial figures (e.g., rectangles 2121R and 2121L in the example illustrated in Fig. 3) corresponding to the plurality of levels (e.g., individual values of the temperature in the above description), the occupant can recognize that the input operation is performed by changing the levels continuously. In contrast, in the vehicle operation input apparatus D and/or the vehicle operation input method, when the vehicle is traveling, by indicating the level setting display including the second pictorial figure (e.g., rectangle in the example illustrated in Fig. 4) representing increase in the levels (e.g., increase in temperature in the above description) and the third pictorial figure (e.g., rectangle in the example illustrated in Fig. 4) representing reduction in the levels (e.g., reduction in the temperature in the above description), the occupant can recognize that the input operation is performed by changing the levels stepwise. This can increase the likelihood of the occupant making an appropriate input for a device installed in the vehicle to operate in an intended manner, which can result in an improved operation of the device.

The vehicle operation input apparatus D and/or the vehicle operation input method may indicate the set level display representing the currently set level (e.g., value of the temperature in the above description) via the first pictorial figures (e.g., rectangles 2121R and 2121L in the example illustrated in Fig. 3) when the vehicle is stopped or via the line segments 224R and 224L when the vehicle is traveling. Since the set level display may be indicated in mutually different display aspects depending on whether the vehicle is stopped, the occupant can recognize differences in the input form between a stop and a travel. This can increase the likelihood of the occupant making an appropriate input for a device installed in the vehicle to operate in an intended manner, which can result in an improved operation of the device.

Particularly in the exemplary embodiment described above, the device 6 is an air conditioning apparatus, the setting target is temperature, and the levels are the values of the temperature and this can provide the vehicle operation input apparatus D for an air conditioning apparatus that can cause the occupant to recognize differences in the input form between a stop and a travel in the setting of the temperature. However, the present disclosure is not limited to the exemplary embodiment and changes can be made as appropriate.

For example, the device 6 may be an air conditioning apparatus, the setting target may be an airflow amount, and the levels may be the values of the airflow amount. This can provide the vehicle operation input apparatus D for an air conditioning apparatus that can cause the occupant to recognize differences in the input form between a stop and a travel in the setting of an airflow amount.

Alternatively, for example, the device 6 may be an audio apparatus, the setting target may be a sound volume, and the levels may be the values of the sound volume. This can provide the vehicle operation input apparatus D for an audio apparatus that can cause the occupant to recognize differences in the input form between a stop and a travel in the setting of the sound volume.

Alternatively, for example, the device 6 may be an automatic traveling apparatus that travels the local vehicle at a set speed, the setting target may be the set speed, and the levels may be the values of the set speed. This can provide the vehicle operation input apparatus D for an automatic traveling apparatus that can cause the occupant to recognize differences in the input form between a stop and a travel in the setting of the speed.

Alternatively, for example, the device 6 may be a power window apparatus, the setting target may be an opening degree representing the degree of opening a window, and the levels may be the values of the opening degree. This can provide the vehicle operation input apparatus for a power window apparatus that can cause the occupant to recognize differences in the input form between a stop and a travel in the setting of the opening degree.

In addition, in the exemplary embodiment described above, one input operation on the D-temperature rise setting display 222R changes the temperature one level (e.g., 0.5°C in the exemplary embodiment described above), but one input operation on the D-temperature rise setting display 222R may change the temperature a number of levels equal to the number of contact points in contact with the D-temperature rise setting display 222R. For example, when one tap operation with three fingers is performed on the D-temperature rise setting display 222R, the temperature may be changed three levels (e.g., 1.5°C in the example described above). Alternatively, the method of changing the level may be changed depending on the number of contact points in contact with the D-temperature rise setting display 222R. For example, the temperature may be changed one level (e.g., 0.5°C in the example described above) when one tap operation with one finger is performed on the D-temperature rise setting display 222R, the temperature may be changed two levels (e.g., 1.0°C in the example described above) when one tap operation with two fingers is performed on the D-temperature rise setting display 222R, and the temperature may be changed to the border value of the settable range (e.g., upper limit value in this example) when one tap operation with three fingers is performed on the D-temperature rise setting display 222R. This may also be true of the D-temperature drop setting display 223R, the A-temperature rise setting display 222L, and the A-temperature drop setting display 223L.

In addition, the first pictorial figures on the D-temperature setting display 212R, the first pictorial figures on the A-temperature setting display 212L, the D-temperature rise setting display 222R, the D-temperature drop setting display 223R, the A-temperature rise setting display 222L, and the A-temperature drop setting display 223L are rectangular in the exemplary embodiment described above, but the present disclosure is not limited to the exemplary embodiment and they may be circular, oblong, elliptic, or polygonal as necessary.

In addition, the contours and pictorial symbols on the D-temperature rise setting display 222R, the D-temperature drop setting display 223R, the A-temperature rise setting display 222L, and the A-temperature drop setting display 223L are indicated in the exemplary embodiment described above, but the contours do not have to be displayed and the pictorial symbols may be displayed in all of or a part of 222R, 223R, 222L, and 223L.

In addition, the input position detection unit 2 is an apparatus that can detect an input position on the entire operation surface thereof in the exemplary embodiment described above, but the input position detection unit 2 may be an apparatus that can detect input positions in at least the second positions on the operation surfaces corresponding to the first positions on the display surfaces for displaying the blowout port setting display 201, the airflow amount setting display 202, the D-temperature setting display 212R, the A-temperature setting display 212L, the D-temperature rise setting display 222R, the D-temperature drop setting display 223R, the A-temperature rise setting display 222L, and/or the A-temperature drop setting display 223L.

In addition, in the exemplary embodiment described above, switching between the input screen 200a in the case of a stop and the input screen 200b in the case of traveling may be stopped in the case of congestion. For example, in the case of congestion, even when the vehicle that is traveling is stopped, the display of the input screen 200b and the operation aspect of the input operation in the case of traveling may be maintained. For determination of congestion, the vehicle operation input apparatus D may only need to further include a position measurement unit such as, for example, a GPS (Global Positioning System) that measures the position of the local vehicle and a receiver that receives traffic information including congestion information provided by, for example, a VICS (Vehicle Information and Communication System (registered trademark)) or the like, and the control processing unit 3 may only need to determine whether the position of the local vehicle measured by the position measurement unit is included in the congestion region (e.g., congestion range) represented based on the congestion information received by the receiver. This can eliminate flicker that may occur when switching between the input screens 200a and 200b is performed during congestion and can make an input operation easier.

Although the present disclosure has been described appropriately and sufficiently above using exemplary embodiments with reference to the drawings, those skilled in the art should recognize that the exemplary embodiments described above can be changed and/or modified easily. Accordingly, as long as changes and modifications made by those skilled in the art do not depart from the scope of the claims described in the appended claims, the changes and the modifications are assumed to be included in the scope of the claims.

### Description of Reference Signs and Numerals

D: vehicle operation input apparatus
TP: touch panel
DP: display surface
SP: operation surface
1: display unit
2: input position detection unit
3: control processing unit
4: storage unit
5: vehicle speed measurement unit
6-1: first device
6-2: second device
11: pixel
21: dot
31: control unit
32: display control unit
33: input content obtaining unit
34: stop determination unit
35: device processing unit
200a, 200b: input screen
212R: driver seat side temperature setting display
212L: passenger seat side temperature setting display
222R: driver seat side temperature rise setting display
222L: passenger seat side temperature rise setting display
223R: driver seat side temperature drop setting display
223L: passenger seat side temperature drop setting display

## Claims

1. A vehicle operation input apparatus (D) configured to perform an input to a device (6-1, 6-2) that is installed in a vehicle and that is configured to achieve a predetermined function at a plurality of mutually different levels, the vehicle operation input apparatus (D) comprising:
a display unit (1);
an input position detection unit (2) that has an operation surface (SP) associated with a first position on a display surface (DP) of the display unit (1) and is configured to detect a second position on the operation surface (SP), the second position being where an input operation is performed;
a display control unit (32) configured to control the display unit (1);
an input content obtaining unit (33) configured to obtain, as input content, display content displayed in the first position that corresponds to the second position detected by the input position detection unit (2); and
a stop detection unit (34) configured to detect whether the vehicle is stopped,
wherein the display control unit (32) is configured to indicate a level setting display (212R, 212L, 222R, 222L, 223R, 223L) representing a setting of the levels in the first position on the display surface (DP) in mutually different display aspects depending on whether the stop detection unit (34) has detected that the vehicle is stopped, and
wherein the input operation has mutually different operation aspects that depend on whether the stop detection unit (34) has detected that the vehicle is stopped.

2. The vehicle operation input apparatus (D) according to claim 1,
wherein the level setting display (212R, 212L) includes a plurality of first pictorial figures corresponding to the plurality of levels when the stop detection unit has detected that the vehicle is stopped and the level setting display (222R, 222L, 223R, 223L) includes a second pictorial figure that represents increase in the levels and a third pictorial figure that represents reduction in the levels when the stop detection unit has not detected that the vehicle is stopped, and
the input operation is a slide operation when the stop detection unit (34) has detected that the vehicle is stopped or a tap operation when the stop detection unit (34) has not detected that the vehicle is stopped.

3. The vehicle operation input apparatus (D) according to claim 2,
wherein the level setting display (212R, 212L, 222R, 222L, 223R, 223L) is configured to, when the stop detection unit has detected that the vehicle is stopped, also function as a set level display representing a currently set level,
the display control unit (32) is further configured to display, when the stop detection unit (34) has detected that the vehicle is stopped,
in a first display aspect, a first pictorial figure of the plurality of first pictorial figures that corresponds to the currently set level in the display unit (1),
in a second display aspect that differs from the first display aspect, at least one first pictorial figure of the plurality of first pictorial figures that does not correspond to the currently set level in the display unit (1), and
the display control unit (32) is further configured to, when the stop detection unit (34) has not detected that the vehicle is stopped, further display:
a line segment representing a range settable by the plurality of levels,
in a third display aspect, a position in the line segment corresponding to the currently set level in the display unit (1),
in a fourth display aspect that differs from the third display aspect, at least one position in the line segment not corresponding to the currently set level in the display unit (1).

4. A vehicle operation input method for performing an input to a device (6-1, 6-2) that is installed in a vehicle and that is configured to achieve a predetermined function at a plurality of mutually different levels, the vehicle operation input method comprising:
a display step of displaying predetermined display content;
an input position detection step of detecting a position on a display surface (DP), the position being where an input operation is performed;
an input content obtaining step of obtaining, as input content, display content displayed in the position detected in the input position detection step; and
a stop detection step of detecting whether the vehicle is stopped,
the display control step indicating a level setting display (212R, 212L, 222R, 222L, 223R, 223L) representing a setting of the levels in mutually different display aspects depending on whether the vehicle has been detected to be stopped in the stop detection step,
the input operation having mutually different operation aspects depending on whether the vehicle has been detected to be stopped in the stop detection step.

5. The method according to claim 4, wherein the level setting display (212R, 212L) includes a plurality of first pictorial figures corresponding to the plurality of levels when the vehicle has been detected to be stopped and the level setting display (222R, 222L, 223R, 223L) includes a second pictorial figure that represents increase in the levels and a third pictorial figure that represents reduction in the levels when the vehicle has not been detected to be stopped, and
the input operation is a slide operation when the vehicle has been detected to be stopped or a tap operation when the vehicle has not been detected to be stopped.

6. The method according to claim 5, wherein, when the vehicle has been detected to be stopped, the level setting display (212R, 212L, 222R, 222L, 223R, 223L) also functions as a set level display representing a currently set level,
wherein the method further comprises:
displaying, when the vehicle has been detected to be stopped,
in a first display aspect, a first pictorial figure of the plurality of first pictorial figures that corresponds to the currently set level,
in a second display aspect that differs from the first display aspect, at least one first pictorial figure of the plurality of first pictorial figures that does not correspond to the currently set level, and
further displaying, when the vehicle has not been detected to be stopped,
a line segment representing a range settable by the plurality of levels,
in a third display aspect, a position in the line segment corresponding to the currently set level,
in a fourth display aspect that differs from the third display aspect, at least one position in the line segment not corresponding to the currently set level.

7. A computer program product comprising computer-readable instructions that, when loaded and run on a computer, cause the computer to perform the method according to any one of claims 4 to 6.
